# EUROPÄISCHE PATENTSCHRIFT

(11) **EP 0 944 822 B1**
(45) Veröffentlichungstag und Bekanntmachung des Hinweises auf die Patenterteilung: **12.09.2001**
(21) Anmeldenummer: 97951111.0
(22) Anmeldetag: 09.12.1997
(51) Int. Cl.: G01N 21/90

(54) **BEHÄLTERGLASPRÜFVERFAHREN UND -VORRICHTUNGEN**
METHOD AND DEVICES FOR CHECKING CONTAINER GLASS
PROCEDE ET DISPOSITIFS DE CONTROLE DE VERRE A RECIPIENTS

(30) Priorität: 13.12.1996 DE 19651924
(43) Veröffentlichungstag der Anmeldung: 29.09.1999
(73) Patentinhaber: Olschewski, Dieter, 50170 Kerpen (DE)
(72) Erfinder: Olschewski, Dieter, 50170 Kerpen (DE)
(74) Vertreter: Springorum, Harald, Dr.
(86) Internationale Anmeldenummer: DE9702873
(87) Internationale Veröffentlichungsnummer: WO9826278

(56) Entgegenhaltungen:
- EP-A- 0 222 959
- EP-A- 0 456 910
- WO-A-81/03706
- GB-A- 2 062 855
- GB-A- 2 276 447
- US-A- 4 586 080
- US-A- 4 701 612
- US-A- 5 495 330

## Beschreibung

Die vorliegende Erfindung betrifft Verfahren und Vorrichtungen zur Prüfung von Glasbehältern bzw. anderen transparenten oder teilweise transparenten Behältern, insbesondere zur Rißprüfung.

In der Behälterglasproduktion oder der Produktion anderer transparenter oder auch teilweise transparenter Behälter ist die Qualitätssicherung des Produktionsprozesses eine der vordringlichsten Aufgaben. Insbesondere im Bereich der Nahrungsmittelgläser und der zur Aufnahme pharmazeutischer Produkte bestimmten Glasbehälter ist dies besonders wichtig. Dies gilt nicht zuletzt auch aus Gesichtspunkten heraus, die sich aus einer möglichen Produkthaftung ergeben.

Die Qualitätssicherung hat hier insbesondere die Abwesenheit von Rissen im Behälter sicherzustellen.

Die weitaus meisten Qualitätssicherungsverfahren basieren hier auch heute noch auf visueller Tätigkeit des Menschen selbst. Eine solche Tätigkeit ist jedoch nur kurze Zeit ununterbrochen durch den Menschen ausführbar, da hierbei schnell erhebliche Ermüdungserscheinungen auftreten und damit die Fehlerrate extrem steigt. Da dies aus den eingangs genannten Gründen nicht tolerabel ist, müssen häufige und auch längere Pausenzeiten eingehalten werden, was einen erhöhten Personalbedarf und damit hohe Kosten zur Folge hat.

Es existieren jedoch auch schon automatische Verfahren zur Rißprüfung in Behältern: Bei diesen unterscheidet man einerseits nach Verfahren, die eine solche Überwachung mittels einer Kamera zur Bildaufnahme und zugehörigem Bildauswerteverfahren realisieren und etwa in der DE 195 38013 A1, der DE 35 32068 C2, der EP 0456 910 A1, der US 4958 223 und der US 4 701 612 beschrieben sind, und andererseits nach Methoden, die mit Hilfe einfacher optischer Sensoren nur die Intensität von Lichtstrahlen überwachen, wie es etwa nach der Beschreibung der DE 35 24 943 A1 der Fall ist.

Der prinzipielle Nachteil der bildauswertenden Verfahren und Vorrichtungen besteht in der zu ihrem praxistauglichen Betrieb erforderlichen enormen Rechenleistung. Es muß gewährleistet sein, daß die Prüfvorrichtung den Ausstoß der behälterproduzierenden Maschine nicht verlangsamt. Hierzu sind dann entweder sehr schnelle und damit teure Auswerterechner, etwa solche in hochparalleler Technologie oder aber mehrere parallele Prüfeinrichtungen erforderlich. Beides ist jedoch mit hohen Kosten verbunden.

Der andere Ansatz, bei dem mit Hilfe einfacher optischer Sensoren jeweils nur die Intensität von Lichtstrahlen überwacht wird, ist demgegenüber wesentlich einfacher zu realisieren. Dementsprechend läßt sich hier die erforderliche Geschwindigkeit auch erheblich kostengünstiger erzielen, als dies bei den vorstehend angeführten Verfahren der Fall ist. Ein derar- tiges Prüfverfahren bzw. Vorrichtungen zu seiner Durchführung lehrt etwa die DE 35 24 943 Al. Sie macht sich zu Nutze, daß ein Lichtstrahl, der auf die Rückfläche (Innenwand) einer Glasbehälterwand trifft, annähernd total reflektiert wird. Weist die Wand keinen Fehler auf, verläßt ein reflektierter Lichtstrahl die Wand wieder unter einem Ausfallwinkel, der dem Einfallswinkel gleich ist. Verläuft durch die Behälterwand hingegen ein Riß, so wird der bereits reflektierte ausfallende Lichtstrahl am Riß (bzw. einer Störung) erneut reflektiert und kann dann als Fehierreflex von einem geeignet angeordneten Detektor aufgenommen werden. Eine solche Vorrichtung ist von ihren Komponenten sehr preiswert und eignet sich darüber hinaus zum Betrieb mit einem sehr schnellen und im Vergleich zu Bildauswertungsmethoden weniger aufwendigen Auswerteverfahren. Ein wesentlicher Nachteil liegt hier jedoch darin, daß sich derartige Vorrichtungen und die zu ihrem Betrieb notwendigen Verfahren als nicht immer zuverlässig herausgestellt haben. Insbesondere ist es schwierig sie auf unterschiedlich gut reflektierende Materialien des Behälters einzustellen. So reflektiert etwa blaues Glas weitaus schlechter als weißes Glas, und es ist daher problematisch, eine Vorrichtung auf die durch die zu prüfenden Produkte gegebenen optischen Verhältnisse zuverlässig einzustellen.

Daher ist es Aufgabe der vorliegenden Erfindung, ausgehend vom Stand der Technik nach DE 3524943 A1 eine Vorrichtung und Verfahren zu ihrem Betrieb anzugeben, die es ermög- lichen transparente oder teilweise transparente Behälter auf Risse oder andere Störungen mit Hilfe einfacher optischer Sensoren zu prüfen, wobei jeweils nur die Intensität von Lichtstrahlen überwacht wird und dabei gleichzeitig eine ausreichende Zuverlässigkeit und Flexibilität in Hinblick auf die Anpassung an die zu prüfenden Behältermaterialien gewährleistet ist.

Diese Aufgabe wird erfindungsgemäß durch eine Vorrichtung und ein Verfahren zur Rißprüfung bzw. Störungsprüfung an Behältern gelöst, wobei die Vorrichtung Bewegungsmittel, um den Behälter zu bewegen, vorzugsweise zu drehen, eine Lichquelle und eine optische Aufnahmevorrichtung aufweist, wobei die Aufnahmevorrichtung das von ihr erfaßte Licht in ein elektrisches Signal umsetzt, das sich entsprechend der Intensität des erfaßten Lichts ändert, und weiterhin Aufnahme- und Überwachungsmittel vorgesehen sind, um das elektrische Signal über die Zeit der Bewegung, vorzugsweise Drehung des Behälters aufzunehmen und um es daraufhin zu überwachen, ob das elektrische Signal einen bestimmten Grenzwert überschreitet und die Vorrichtung erfindungsgemäß dadurch gekennzeichnet ist, daß die Lichtquelle mit getaktetem Gleichstrom betrieben wird und das Verfahren zur Rißprüfung bzw. Störungsprüfung von Behältern folgende Verfahrensschritte aufweist:
(i) Zunächst wird ein Behälter bewegt, vorzugsweise um seine Längsachse gedreht.
(ii) Ein Lichtstrahl aus getaktetem Gleichlicht (Licht, welches aus einer mit getaktetem Gleichstrom betriebenen Lichtquelle stammt) wird auf den auf Rißbildung bzw. Störungen hin zu prüfenden Teil des sich bewegenden, vorzugsweise sich drehenden Behälters gerichtet.
(iii) Ein von dem Behälter reflektierter Lichtstrahl, wird mittels einer optischen Aufnahmevorrichtung wieder aufgenommen, die so positioniert ist, daß sie in etwa im Fokus bzw. der Schärfeebene eines solchen reflektierten Lichtstrahls liegt, der typischerweise von einem zu detektierenden Riß bzw. einer zu detektierenden Störung hervorgerufen wird.
(iv) Die optische Aufnahmevorrichtung setzt das erfaßte Licht in ein elektrisches Signal um, das sich entsprechend der Intensität des erfaßten Lichts ändert.
(v) Das elektrische Signal wird über die Zeit der Bewegung, vorzugsweise Drehung des Behälters aufgenommen und daraufhin überwacht, ob es einen bestimmten Grenzwert überschreitet.

Optional können hiernach noch die folgenden Schritte erfolgen:
(vi) Wird der Grenzwert während der Bewegung, vorzugsweise Drehung des Behälters nicht überschritten, so wird der jeweils geprüfte Behälter als GUT vermerkt.
(vii) Wird der Grenzwert während der Bewegung, vorzugsweise Drehung des Be- hälters überschritten, so wird der jeweils geprüfte Behälter als SCHLECHT vermerkt.

Dabei handelt es sich im Falle des getakteten Gleichstroms um einen Gleichstrom, der taktweise an- und ausgeschaltet wird. Die Frequenz des getakteten Gleichstroms zum Betrieb der Lampe ist bei der erfindungsgemäßen Vorrichtung vorzugsweise einstellbar, um sie den jeweiligen optischen Verhältnissen anpassen zu können. Als Lampe kann eine Halogenlampe, etwa eine H2- oder H4-Halogenlampe Verwendung finden.

Die Verwendung getakteten Gleichlichtes empfiehlt sich, da Messungen mit Wechsellicht (Licht, da aus einer mit Wechselstrom betriebenen Quelle stammt) gezeigt haben, daß dieses ungeeignet zur Durchführung des erfindungsgemäßen Verfahrens ist und demgegenüber die Eignung getakteten Gleichlichts überraschend gefunden wurde. Die Frequenz zur Taktung des Lichtes ist dabei abhängig von dem Typ des für die zu überwachenden Behälter verwendeten transparenten bzw. halbtransparenten Materials, insbesondere Glases. So hat sich gezeigt, daß blaues Glas eine schlechtere Reflexion hervorruft als weißes Glas. Je schlechter die Reflexion des Glases (Materials) ist, desto höher sollte die Frequenz des Taktung des Lichtes liegen. Gute Erfahrungen wurden mit H4-Halogenlampen bei 20 KHz gemacht, sie waren insbesondere auch zur Rißerkennung in Behältern aus blauem, also schlechter reflektierendem Glas geeignet.

Die optische Aufnahmevorrichtung kann etwa als ein Fotoelement, vorzugsweise in Form einer Fotodiode ausgeführt sein.

Eine bevorzugte Ausführungsform nach der vorliegenden Erfindung ist erfindungsgemäß dadurch gekennzeichnet, daß als optische Aufnahmevorrichtung eine Bildaufnahmeeinrichtung zur Aufnahme eines zweidimensionalen Bildes, vorzugsweise ein CCD-Chip Verwendung findet.

Vorzugsweise ist die optische Aufnahmevorrichtung an einer Positioniereinrichtung angebracht, die es ermöglicht, die Aufnahmevorrichtung in unterschiedlichen Schärfeebenen zu positionieren.

Zwischen optischer Aufnahmevorrichtung und zu prüfendem Objekt kann dabei ein Linsensystem vorgesehen sein.

Durch die Verwendung einer Bildaufnahmeeinrichtung zur Aufnahme eines zweidimensionalen Bildes, vorzugsweise eines CCD-Chips kann eine besonders gute Schärfeeinstellung der Vorrichtung erreicht werden: Die Bildaufnahmeeinrichtung dient hier nicht, wie im Falle der Verwendung bildauswertender Methoden zur Rißprüfung der Bereitstellung eines vollständigen zweidimensionalen Bildes im Auswerterechner, sondern vielmehr der Schärfejustage für den Anwender des Systems. Die von der Bildaufnahmeeinrichtung aufgenommene optische Information wird auf ein Anzeigegerät, etwa einen Bildschirmmonitor geleitet. Hier kann der Benutzer der Vorrichtung das System nun wie folgt optimal einstellen: Er bringt ein fehlerbehaftetes Prüfobjekt, also ein solches mit einem Riß in den Aufnahmebereich der Bildaufnahmeeinrichtung und stellt diese nun, beispielsweise mit Hilfe der Positioniereinrichtung so ein, daß die vom Riß reflektierten Lichtstrahlen in der Schärfeebene der Bildaufnahmeeinrichtung liegen. Dies kann leicht geschehen, wenn ein Monitor das von der Bildaufnahmeeinrichtung aufgenommene Bild wiedergibt und dem Bediener eine optische Rückkopplung über die Güte der gewählten Einstellung ermöglicht. Er muß somit die Bildaufnahmeeinrichtung so positionieren, daß der Riß auf dem Monitor scharf identifizierbar ist. Hiernach kann er dann vorzugsweise angeben, welcher Bereich des durch die Bildaufnahmeeinrichtung aufgenommenen zweidimensionalen Bildes entsprechend seiner Intensität in ein elektrisches Signal zur weiteren Auswertung umgewandelt werden soll. Die in dem dann im weiteren als optische Aufnahmevorrichtung fungierenden Bereich gemessene Intensität wird dann erfindungsgemäß weiterverarbeitet. Dabei kann die Intensität im relevanten Bereich durch Aufsummieren der Intensitäten der einzelnen Bildelemente, durch Bildung eines Mittelwertes über die Intensitäten der Elemente oder auf andere geeignete Weise ermittelt werden.

Eine bevorzugte Ausführungsform des Verfahrens zur Rißprüfung von Behältern nach der vorliegenden Erfindung zeichnet sich im weiteren dadurch aus, daß der im Schritt (v) des Verfahrens zu überwachende Grenzwert ausgehend von einem frei gewählten Initialwert automatisch während der Durchführung des Verfahrens dadurch ermittelt wird, daß ein während einer bestimmten Anzahl von Behältern jeweils während der Bewegung, vorzugsweise Drehung dieser Behälter für die reflektierte Lichtintensität gemessener Maximalwert ausgewählt und als neuer Grenzwert für die weitere Durchführung des Verfahrens verwendet wird.

In einer weiteren Ausführungsform des Verfahrens finden dabei nur diejenigen gemessenen Maximalwerte in die automatische Ermittlung des Grenzwertes Eingang, die von solchen Behältern stammen, die als GUT vermerkt wurden.

Vorzugsweise ist die Anzahl der Behälter, die zur automatischen Ermittlung des Grenzwertes verwendet werden frei wählbar.

Eine bestimmte prozentuale Überschreitung des jeweils zu überwachenden Grenzwertes wird in einer weiteren Ausführungsform für den weiteren Gang des Verfahrens nach der vorliegenden Erfindung noch nicht als Überschreitung des Grenzwertes behandelt.

Vorzugsweise ist die Größe der prozentualen Überschreitung auch hier frei wählbar.

Eine weitere bevorzugte Ausführungsform des erfindungsgemäßen Verfahrens zeichnet sich dadurch aus, daß das in Schritt (iv) erfaßte Signal vor der weiteren Durchführung des Verfahrens zunächst, vorzugsweise linear, verstärkt wird.

Eine weitere besonders bevorzugte Ausführungsform des Verfahrens ist erfindungsgemäß dadurch gekennzeichnet, daß das in Schritt (iv) erfaßte und evtl. schon verstärkte Signal vor seiner Weiterverarbeitung (Überwachung) in Schritt (v) zunächst nach der Zeit abgeleitet wird, so daß dann nicht mehr das Signal oder seine Verstärkung selbst, sondern seine zeitliche Änderung oder die zeitliche Änderung seiner Verstärkung auf einen Grenzwert hin überwacht wird. Hierdurch ist eine besonders gute Erkennung gewährleistet, da Risse im Behältermaterial meist recht fein sind und abrupt einsetzen. Somit ändert sich das durch die Risse erfindungsgemäß hervorgerufene elektrische Signal an den Rißkanten besonders rasch. Eine rasche Änderung des Signals bewirkt jedoch auch ein besonders starkes, nach der Zeit abgeleitetes Signal, welches somit auch etwa mittels einer Schwellwertüberwachung besonders gut zu detektieren ist.

Die vorliegende Erfindung gewährleistet insgesamt somit eine hohe Verläßlichkeit und Flexibilität bei der Rißerkennung, wobei sie insbesondere auch für optisch schwierig zu handhabende Prüfobjekte geeignet ist und zu ihrer Verwendung keiner aufwendigen und daher kostenintensiven Bildauswerteverfahren nebst den hierzu benötigten Vorrichtungen, wie etwa hochparalleler Rechner bedarf.

Im folgenden werden nicht einschränkend zu verstehende Ausführungsbeispiele anhand der Zeichnung besprochen. In dieser zeigen:
- Fig. 1: eine Darstellung einer Behälterprüfanlage mit einer Ausführungsform einer Prüfvorrichtung nach der vorliegenden Erfindung in schematischer Seitenansicht,
- Fig. 2: ! eine Ausführunsgform einer Prüfvorrichtung nach der vorliegenden Erfindung, gleichfalls in schematischer Darstellung von der Seite her, und
- Fig. 3: eine weitere besonders bevorzugte Ausführunsgform einer Prüfvorrichtung nach der vorliegenden Erfindung, gleichfalls in schematischer Darstellung von der Seite her.

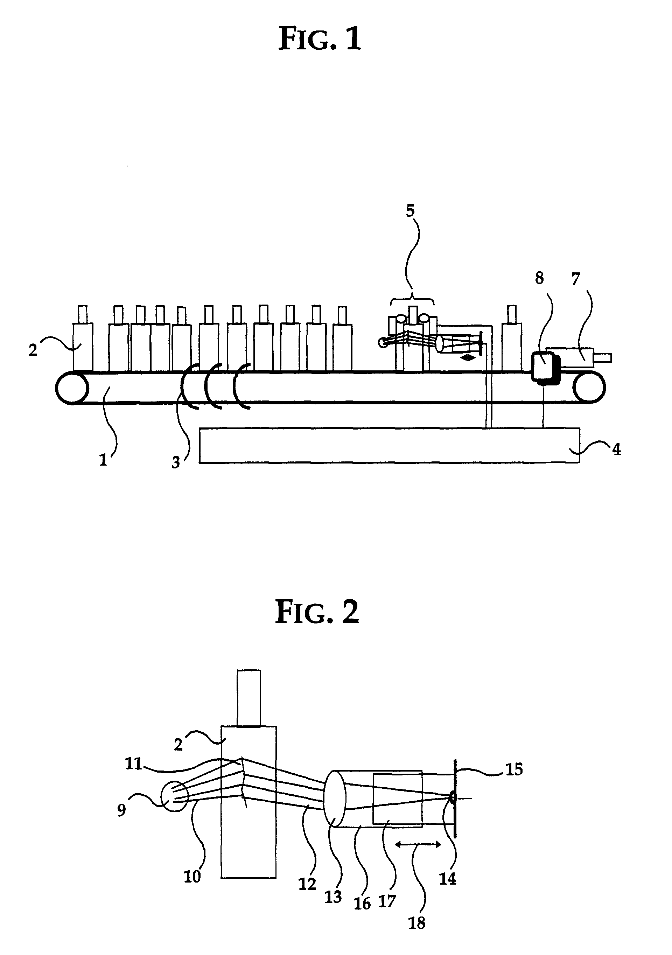

Fig. 1 zeigt eine Darstellung einer Behälterprüfanlage mit einer Ausführungsform einer Prüfvorrichtung nach der vorliegenden Erfindung in schematischer Seitenansicht. Auf einem Förderband **1** werden Glasbehälter **2**, hier Flaschen transportiert und zunächst von einer Vereinzelungsschnecke **3** in einen definierten Abstand zueinander gebracht. Ein Prozeßrechner **4** kann die Position der Flaschen **2** feststellen, da sie zum einen durch die Vereinzelungsschnecke **3** in einen definierten Abstand gebracht wurden und zum anderen dem Prozeßrechner **4** die aktuelle Position des Förderbandes **1** über einen Impulsgeber oder einen Winkelcodierer bekannt ist. Darüber hinaus können auch Lichtschranken, Näherungsschalter oder andere geeignete Sensoren eingesetzt werden, um beispielsweise absolute Positionsinformationen für eine bestimmte Flasche oder als Startinformation zu erhalten; es kann aber auch ein Absolutwertgeber eingesetzt werden. An einer Station des Förderbandes **1** findet eine Rißprüfung **5** nach der vorliegenden Erfindung statt. Auch können weitere Prüfverfahren, wie etwa Druck-, Form-, Rotationssymmetrieprüfungen oder auch Codeerkennungsverfahren unter Einsatz der hierzu erforderlichen Vorrichtungen in Kombination mit der Vorrichtung nach der vorliegenden Erfindung zum Einsatz kommen. Besteht die jeweils geprüfte Flasche die Rißprüfung, so wird ihr etwa der Vermerk OK im Speicher des als Verfahrenssteuereinrichtung fungierenden Prozeßrechners **4** zugeordnet; besteht sie die Prüfung nicht, so wird ihr der Vermerk NOT-OK zugewiesen. Am Förderbandende können diejenigen Flaschen **7**, die einem codierten Qualitätskriterium nicht entsprechen, vorzugsweise mittels einer Ausblasvorrichtung 8, aus dem weiteren Produktionsprozeß herausgesondert werden, wobei die Flaschen, die dem genannten technischen Qualitätskriterium entsprechen, im weiteren Produktionsprozeß verbleiben.

Fig. 2 zeigt eine Rißprüfvorrichtung nach der vorliegenden Erfindung, gleichfalls in schematischer Darstellung von der Seite her. Von einer Lichtquelle **9** geht ein Lichtstrahl **10** aus, der auf den auf Risse **11** zu überprüfenden Teil der Flasche **2** gerichtet wird. Der vom Riß **11** reflektierte Lichtstrahl **12** wird von einer Linse **13** gebündelt und auf eine optische Aufnahmevorrichtung **14**, vorzugsweise eine Fotodiode geworfen, die auf der Deckelfläche **15** eines Zylinders **17** angeordnet ist und mittels zweier ineinander geschachtelter Zylinder **16, 17,** die in Pfleirichtungen **18** gegeneinander verschoben werden können und so als Positioniervorrichtung dienen, bezüglich der Schärfeebene des gebündelten Lichtstrahls eingestellt wird, wobei dies so zu geschehen hat, daß die optische Aufnahmevorrichtung **14** so positioniert ist, daß diese in etwa im Fokus bzw. der Schärfeebene des vom Riß **11** reflektierten und vorzugsweise weiter gebündelten Lichtstrahles liegt. Das Fotoelement **14** setzt das erfaßte Licht in ein elektrisches Signal um, welches dann weiterverarbeitet wird. Die von Rissen **11** reflektierten Lichtstrahlen werden typischerweise so reflektiert, daß das Fotoelement **14** auf einen einmal zu ermittelnden Abstand von der Linse **13** eingestellt wird, worauf alle von Rissen **11** reflektierten Strahlen **12** nach ihrer Bündelung durch die Linse **13** in etwa ihren Fokus am Ort des Fotoelementes **14** haben, was eine sichere Rißerkennung durch die Vorrichtung ermöglicht.

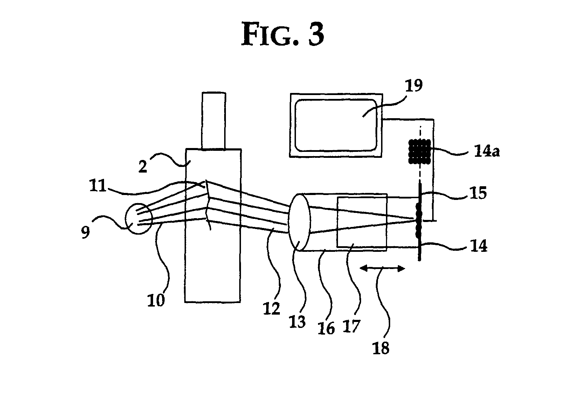

Fig. 3 zeigt eine weitere besonders bevorzugte Ausführunsgform einer Prüfvorrichtung nach der vorliegenden Erfindung, gleichfalls in schematischer Darstellung von der Seite her. Von einer Lichtquelle **9** geht ein Lichtstrahl **10** aus, der auf den auf Risse **11** zu überprüfenden Teil der Flasche **2** gerichtet wird. Der vom Riß **11** reflektierte Lichtstrahl **12** wird von einer Linse **13** gebündelt und auf eine optische Aufnahmevorrichtung **14**, nämlich hier eine zweidimensionale Bildaufnahmeeinrichtung (auch in Aufsicht dargestellt **14a**), vorzugsweise eine CCD-Matrix (CCD-Chip oder auch Charged Coupled Device - Bauteil) geworfen, die auf der Deckelfläche **15** eines Zylinders **17** angeordnet ist und mittels zweier ineinander geschachtelter Zylinder **16, 17,** die in Pfleilrichtungen **18** gegeneinander verschoben werden können und so als Positioniervorrichtung dienen, bezüglich der Schärfeebene des gebündelten Lichtstrahls eingestellt wird, wobei dies so zu geschehen hat, daß die optische Aufnahmevorrichtung **14** so positioniert ist, daß diese in etwa im Fokus bzw. der Schärfeebene des vom Riß **11** reflektierten und vorzugsweise weiter gebündelten Lichtstrahles liegt. Durch die Verwendung einer Bildaufnahmeeinrichtung **14**, **14a** zur Aufnahme eines zweidimensionalen Bildes, vorzugsweise eines CCD-Chips kann hier eine besonders gute Schärfeeinstellung der Vorrichtung erreicht werden. Die von der Bildaufnahmeeinrichtung **14, 14a** aufgenommene optische Information wird auf ein Anzeigegerät **19**, vorzugsweise einen Bildschirmmonitor geleitet. Hier kann der Benutzer der Vorrichtung das System nun wie folgt optimal einstellen: Er bringt ein fehlerbehaftetes Prüfobjekt **2**, also ein solches mit einem Riß **11** in den Aufnahmebereich der Bildaufnahmeeinrichtung **14, 14a** und stellt diese nun, beispielsweise mit Hilfe der Positioniereinrichtung **16, 17** so ein, daß die vom Riß **11** reflektierten Lichtstrahlen **12** in der Schärfeebene der Bildaufnahmeeinrichtung **14, 14a** liegen. Dies kann leicht geschehen, da der Monitor **19** das von der Bildaufnahmeeinrichtung **14, 14a** aufgenommene Bild wiedergibt und dem Bediener eine optische Rückkopplung über die Güte der gewählten Einstellung vermittelt. Er muß somit die Bildaufnahmeeinrichtung **14, 14a** so positionieren, daß der Riß **11** auf dem Monitor scharf identifizierbar ist. Hiernach kann er dann vorzugsweise angeben, welcher Bereich des durch die Bildaufnahmeeinrichtung **14, 14a** aufgenommenen zweidimensionalen Bildes als optische Aufnahmeeinrichtung im Sinne der hier vorliegenden Erfindung entsprechend seiner Intensität in ein elektrisches Signal zur weiteren Auswertung umgewandelt werden soll. Dies kann etwa durch Auswahl eines auf dem Monitor **19** dargestellten Bildbereiches erzielt werden. Das innerhalb dieses ausgewählten Bereiches erfaßte Licht wird in ein elektrisches Signal umgesetzt, welches dann weiterverarbeitet wird. So wird eine besonders sichere Rißerkennung durch die erfindungsgemäße Vorrichtung ermöglicht.

## Patentansprüche

1. Vorrichtung zur Rißprüfung bzw. Störungsprüfung an Behältern **(2),** wobei die Vorrichtung Bewegungsmittel, um den Behälter **(2)** zu bewegen, vorzugsweise zu drehen, eine Lichquelle und eine optische Aufnahmevorrichtung **(14)** aufweist, wobei die Aufnahmevorrichtung das von ihr erfaßte Licht in ein elektrisches Signal umsetzt, das sich entsprechend der Intensität des erfaßten Lichts ändert, und weiterhin Aufnahme- und Überwachungsmittel vorgesehen sind, um das elektrische Signal über die Zeit der Bewegung, vorzugsweise Drehung des Behälters aufzunehmen und um es daraufhin zu überwachen, ob das elektrische Signal einen bestimmten Grenzwert überschreitet, **dadurch gekennzeichnet, daß** die Lichtquelle **(9)** mit getaktetem Gleichstrom betrieben wird.

2. Vorrichtung nach Anspruch 1, **dadurch gekennzeichnet, daß** die Frequenz des getakteten Gleichstroms mit der die Lichtquelle betrieben wird einstellbar ist.

3. Vorrichtung nach Anspruch 1 oder 2, **dadurch gekennzeichnet, daß** die Lichtquelle **(9)** eine Halogenlampe, vorzugsweise eine H2- oder H4-Halogenlampe aufweist.

4. Vorrichtung nach Anspruch 1, 2 oder 3, **dadurch gekennzeichnet, daß** als optische Aufnahmevorrichtung **(14)** eine Bildaufnahmeeinrichtung zur Aufnahme eines zweidimensionalen Bildes, vorzugsweise ein CCD-Chip, oder ein ausgewählter Teilbereich der Bildaufnahmeeinrichtung Verwendung findet, wobei Mittel vorgesehen sind, die den jeweils von der Bildaufnahmeeinrichtung oder von einem ausgewählten Teilbereich der Bildaufnahmeeinrichtung aufgenommenen einzelnen Intensitäten der Bildelemente eine einzige Intensität zuordnen.

5. Vorrichtung nach einem der Ansprüche 1 bis 4, **dadurch gekennzeichnet, daß** die optische Aufnahmevorrichtung **(14)** an einer Positioniereinrichtung **(16, 17)** angebracht ist, die es ermöglicht, die Aufnahmevorrichtung (14) in unterschiedlichen Schärfeebenen zu positionieren.

6. Verfahren zur Rißprüfung bzw. Störungsprüfung von Behältern (2) mit folgenden Verfahrensschritten:
(i) ein Behälter **(2)** wird bewegt, vorzugsweise um seine Längsachse gedreht;
(ii) ein Lichtstrahl **(10)** aus getaktetem Gleichlicht wird auf den auf Rißbildung bzw. Störungen hin zu prüfenden Teil des sich bewegenden, vorzugsweise sich drehenden Behälters **(2)** gerichtet;
(iii) ein von dem Behälter **(2)** reflektierter Lichtstrahl **(12),** wird mittels einer optischen Aufnahmevorrichtung **(14)** wieder aufgenommen, die so positioniert ist, daß sie in etwa im Fokus bzw. der Schärfeebene eines solchen reflektierten Lichtstrahls **(12)** liegt, der typischerweise von einem zu detektierenden Riß **(11)** bzw. einer zu detektierenden Störung hervorgerufen wird;
(iv) die optische Aufnahmevorrichtung **(14)** setzt das erfaßte Licht in ein elektrisches Signal um, das sich entsprechend der Intensität des erfaßten Lichts ändert;
(v) das elektrische Signal wird über die Zeit der Bewegung, vorzugsweise Drehung des Behälters **(2)** aufgenommen und daraufhin überwacht, ob es einen bestimmten Grenzwert überschreitet;

7. Verfahren zur Rißprüfung von Behältern nach Anspruch 6, **dadurch gekennzeichnet, daß** nach Schritt (v) des Verfahrens noch folgende Verfahrensschritte erfolgen:
(vi) wird der Grenzwert während der Bewegung, vorzugsweise Drehung des Behälters **(2)** nicht überschritten, so wird der jeweils geprüfte Behälter **(2)** als GUT vermerkt;
(vii) wird der Grenzwert während der Bewegung, vorzugsweise Drehung des Behälters **(2)** überschritten, so wird der jeweils geprüfte Behälter **(2)** als SCHLECHT vermerkt.

8. Verfahren zur Rißprüfung von Behältern nach Anspruch 7, **dadurch gekennzeichnet, daß** der im Schritt (v) des Verfahrens zu überwachende Grenzwert ausgehend von einem frei gewählten Initialwert automatisch während der Durchführung des Verfahrens dadurch ermittelt wird, daß ein während einer bestimmten Anzahl von Behältern **(2)** jeweils während der Bewegung, vorzugsweise Drehung dieser Behälter **(2)** für die reflektierte Lichtintensität gemessener Maximalwert ausgewählt und als neuer Grenzwert für die weitere Durchführung des Verfahrens verwendet wird und nur diejenigen gemessenen Maximalwerte in die automatische Ermittlung des Grenzwertes Eingang finden, die von solchen Behältern stammen, die als GUT vermerkt werden.

9. Verfahren zur Rißprüfung von Behältern nach Anspruch 6, **dadurch gekennzeichnet, daß** der im Schritt (v) des Verfahrens zu überwachende Grenzwert ausgehend von einem frei gewählten Initialwert automatisch während der Durchführung des Verfahrens dadurch ermittelt wird, daß ein während einer bestimmten Anzahl von Behältern **(2)** jeweils während der Bewegung, vorzugsweise Drehung dieser Behälter **(2)** für die reflektierte Lichtintensität gemessener Maximalwert ausgewählt und als neuer Grenzwert für die weitere Durchführung des Verfahrens verwendet wird.

10. Verfahren nach einem der Ansprüche 6 bis 9, **dadurch gekennzeichnet, daß** eine bestimmte prozentuale Überschreitung des jeweils zu überwachenden Grenzwertes für den weiteren Gang des Verfahrens noch nicht als Überschreitung des Grenzwertes behandelt wird.

11. Verfahren nach einem der Ansprüche 6 bis 9, **dadurch gekennzeichnet, daß** das in Schritt (iv) erfaßte Signal vor seiner Überwachung in Schritt (v) zunächst nach der Zeit abgeleitet wird, so daß dann nicht mehr das Signal selbst, sondern seine zeitliche Änderung auf einen Grenzwert hin überwacht wird.

## Claims

1. Device for crack detection and/or disturbance testing on containers (2), the device having moving means for moving, preferably rotating, the container (2), a light source and an optical recording device (14), the recording device converting the light it detects into an electric signal which varies in accordance with the intensity of the detected light and, furthermore, recording and monitoring means are provided for recording the electric signal over the time of the movement, preferably rotation, of the container, and thereafter to monitor whether the electric signal exceeds a specific limiting value, **characterized in that** the light source (9) is operated by a clocked direct current.

2. Device according to Claim 1, **characterized in that** the frequency of the clocked direct current at which the light source is operated can be set.

3. Device according to Claim 1 or 2, **characterized in that** the light source (9) has a halogen lamp, preferably an H2 or H4 halogen lamp.

4. Device according to Claim 1, 2 or 3, **characterized in that** use is made as optical recording device (14) of an image-recording device for recording a two-dimensional image, preferably a CCD chip, or of a selected subregion of the image-recording device, means being provided which assign a single intensity to the individual intensities of the pixels recorded by the image-recording device or by a selected subregion of the image-recording device.

5. Device according to one of Claims 1 to 4, **characterized in that** the optical recording device (14) is fitted on a positioning device (16, 17) which permits the recording device (14) to be positioned in different focal planes.

6. Method for crack detection and/or disturbance testing of containers (2), having the following method steps:
(i) a container (2) is moved, preferably rotated about its longitudinal axis;
(ii) a light beam (10) from a clocked direct current is directed onto the part, which is to be tested for crack formation and/or disturbances, of the moving, preferably rotating container (2);
(iii)a light beam (12) reflected by the container (2) is picked up again by means of an optical recording device (14) which is positioned such that it is situated approximately at the focus or in the focal plane of such a reflected light beam (12), which is typically produced by a crack (11) to be detected and/or by a disturbance to be detected;
(iv) the optical recording device (14) converts the detected light into an electrical signal which varies in accordance with the intensity of the detected light; and
(v) the electric signal is picked up over the time of the movement, preferably rotation, of the container (2) and monitored as to whether it exceeds a specific limiting value.

7. Method for crack detection in containers according to Claim 6, **characterized in that** the following method steps are further performed after step (v) of the method:
(vi) if the limiting value is not exceeded during the movement, preferably rotation, of the container (2), the respectively tested container (2) is marked as GOOD; and
(vii)if the limiting value is exceeded during the movement, preferably rotation, of the container (2), the respectively tested container (2) is marked as POOR.

8. Method for crack detection in containers according to Claim 7, **characterized in that** the limiting value to be monitored in step (v) of the method is determined automatically, starting from a freely selected initial value, as the method is being carried out by virtue of the fact that in the course of a specific number of containers (2) a maximum value measured in each case during the movement, preferably rotation, of these containers (2) for the reflected light intensity is selected and is used as the new limiting value for the further conduct of the method, and only those measured maximum values which stem from containers marked as GOOD feature in the automatic determination of the limiting value.

9. Method for crack detection in containers according to Claim 6, **characterized in that** the limiting value to be monitored in step (v) of the method is determined automatically, starting from a freely selected initial value, as the method is being carried out by virtue of the fact that in the course of a specific number of containers (2) a maximum value measured in each case during the movement, preferably rotation, of these containers (2) for the reflected light intensity is selected and is used as the new limiting value for the further conduct of the method.

10. Method according to one of Claims 6 to 9, **characterized in that** a specific percentage overshooting of the limiting value respectively to be monitored is not yet treated as overshooting the limiting value for the further course of the method.

11. Method according to one of Claims 6 to 9, **characterized in that** the signal detected in step (iv) is firstly differentiated with respect to time before being monitored in step (v), so that it is then no longer the signal itself, but its time variation which is monitored for a limiting value.

## Revendications

1. Dispositif pour la vérification de la présence de fissures ou la vérification de la présence de défauts sur des récipients (2), le dispositif présentant des moyens de déplacement pour déplacer le récipient (2), de préférence pour le faire tourner, une source de lumière et un dispositif (14) d'enregistrement optique, le dispositif d'enregistrement convertissant la lumière qu'il a détectée en un signal électrique qui se modifie en fonction de l'intensité de la lumière détectée, et en outre des moyens d'enregistrement et de surveillance sont prévus pour enregistrer le signal électrique pendant la durée du déplacement, de préférence de la rotation du récipient, pour ensuite vérifier si le signal électrique dépasse une valeur limite définie, **caractérisé en ce que** la source de lumière (9) est alimentée en courant continu cadencé.

2. Dispositif selon la revendication 1, **caractérisé en ce que** la fréquence du courant continu cadencé par laquelle la source de lumière est alimentée est réglable.

3. Dispositif selon la revendication 1 ou 2, **caractérisé en ce que** la source de lumière (9) présente une lampe à halogène, de préférence une lampe à halogène H2 ou H4.

4. Dispositif selon la revendication 1, 2 ou 3, **caractérisé en ce que** comme dispositif (14) d'enregistrement optique, on utilise un dispositif d'enregistrement d'images pour l'enregistrement d'une image bidimensionnelle, de préférence une puce CCD, ou une partie sélectionnée du dispositif d'enregistrement d'image, et des moyens sont prévus pour associer une seule intensité à chacune des intensités individuelles des éléments d'image enregistrés par le dispositif d'enregistrement d'images ou par une partie sélectionnée du dispositif d'enregistrement d'images.

5. Dispositif selon l'une des revendications 1 à 4, **caractérisé en ce que** le dispositif (14) d'enregistrement optique est installé sur un dispositif (16, 17) de positionnement qui permet de positionner le dispositif d'enregistrement (14) dans différents plans de netteté.

6. Procédé pour la vérification de la présence de fissures ou pour la vérification de la présence de défauts sur des récipients (2), présentant les étapes de procédé suivantes :
(i) un récipient (2) est déplacé, de préférence tourné autour de son axe longitudinal ;
(ii) un rayon lumineux (10) de lumière continue cadencée est dirigé sur la partie du récipient (2) qui se déplace, de préférence qui tourne, sur laquelle il faut vérifier la présence de fissures ou de défauts ;
(iii) un rayon lumineux (12) réfléchi par le récipient (2) est enregistré par un dispositif (14) d'enregistrement optique qui est positionné de manière à être situé sensiblement au foyer ou dans le plan de netteté d'un tel rayon lumineux réfléchi (12) qui est typiquement provoqué par une fissure (11) à détecter ou par un défaut à détecter ;
(iv) le dispositif (14) d'enregistrement optique convertit la lumière détectée en un signal électrique qui se modifie en fonction de l'intensité de la lumière détectée ;
(v) le signal électrique est enregistré pendant la durée du déplacement, de préférence de la rotation du récipient (2), et on vérifie ensuite s'il dépasse une valeur limite définie.

7. Procédé selon la revendication 6, pour la vérification de la présence de fissures sur des récipients, **caractérisé en ce qu'**après l'étape (v) du procédé, les étapes de procédé suivantes sont encore exécutées :
(vi) si la valeur limite n'est pas dépassée pendant le déplacement, de préférence la rotation du récipient (2), le récipient testé (2) est désigné comme bon ;
(vii) si la valeur limite est dépassée pendant le déplacement, de préférence la rotation du récipient (2), le récipient (2) testé est désigné comme mauvais.

8. Procédé selon la revendication 7, pour la vérification de la présence de fissures sur des récipients, **caractérisé en ce que** la valeur limite à surveiller à l'étape (v) du procédé est déterminée automatiquement pendant l'exécution de procédé à partir d'une valeur initiale sélectionnée librement, en sélectionnant une valeur maximale de l'intensité de la lumière réfléchie, chaque fois mesurée sur un nombre de récipients (2) pendant le déplacement, de préférence la rotation de ces récipients (2), et en l'utilisant comme nouvelle valeur limite pour la poursuite de l'exécution du procédé, et seules sont utilisées dans la détermination automatique de la valeur limite les valeurs maximales mesurées qui proviennent de récipients qui sont désignés comme bons.

9. Procédé selon la revendication 6, pour la vérification de la présence de fissures sur des récipients, **caractérisé en ce que** la valeur limite à surveiller pendant l'étape (v) du procédé est déterminée automatiquement pendant l'exécution du procédé à partir d'une valeur initiale sélectionnée librement, en sélectionnant une valeur maximale de l'intensité de la lumière réfléchie chaque fois mesurée sur un nombre de récipients (2) pendant le déplacement, de préférence la rotation de ces récipients (2), et en l'utilisant comme nouvelle valeur limite pour la poursuite de l'exécution du procédé.

10. Procédé selon l'une des revendications 6 à 9, **caractérisé en ce qu'**un pourcentage défini de dépassement de la valeur limite à surveiller n'est pas encore traité comme dépassement de la valeur limite pour la poursuite de l'exécution du procédé.

11. Procédé selon l'une des revendications 6 à 9, **caractérisé en ce qu'**avant sa surveillance à l'étape (v), le signal détecté à l'étape (iv) n'est dérivé qu'après un certain temps, de sorte que ce n'est plus le signal lui-même qui est surveillé mais bien sa modification dans le temps par rapport à une valeur limite.
